# EUROPÄISCHE PATENTSCHRIFT

(11) **EP 1 382 621 B1**
(45) Veröffentlichungstag und Bekanntmachung des Hinweises auf die Patenterteilung: **09.05.2007**
(21) Anmeldenummer: 03015549.3
(22) Anmeldetag: 10.07.2003
(51) Int. Cl.: C08F 218/02, D21H 19/20, B41M 5/00

(54) **Silan-haltiger Polyvinylalkohol für Streichmassen**
Silane containing polyvinyl alcohol for coating compositions
Alcool polyvinylique contenant du silane utilisé dans des compositions d'enduction

(30) Priorität: 18.07.2002 DE 10232666
(43) Veröffentlichungstag der Anmeldung: 21.01.2004
(73) Patentinhaber: Wacker Polymer Systems GmbH & Co. KG, 84489 Burghausen (DE)
(72) Erfinder: Bacher, Andreas, Dr., 84489 Burghausen (DE); Fickert, Karl-Ernst, 84503 Altötting (DE); Mayer, Theo, Dr., 84387 Julbach (DE); Stark, Kurt, Dr., 84508 Burgkirchen (DE)
(74) Vertreter: Schuderer, Michael

(56) Entgegenhaltungen:
- EP-A- 1 127 706
- US-A1- 2002 048 661
- US-A1- 2002 064 633

## Beschreibung

Die Erfindung betrifft Silan-haltige Polyvinylalkohole für Streichmassen, insbesondere für die Beschichtung von Tintenstrahl-Aufzeichnungsmaterialien.

Polyvinylalkohole werden in Papierstreichmassen als Cobinder eingesetzt um den Glanz und den Weißgrad der Papierbeschichtung zu verbessern. Die Papierstriche, insbesondere für Inkjet-Papiere, sind einer hohen mechanischen Belastung ausgesetzt. Es wird daher gefordert, dass sich die Beschichtungen durch hohe Abriebfestigkeit auszeichnen. Zudem muß die Formulierung eine gute Tintenabsorption gewährleisten, ohne dass der Tintentropfen verläuft.

Die EP-A 76490 beschreibt Silicium-haltige Polyvinylalkohole, welche zur Papierbeschichtung verwendet werden. Der Siliciumanteil wird dabei entweder durch nachträgliche Silylierung von Polyvinylalkohol eingebracht, oder mittels Copolymerisation von ethylenisch ungesättigten, Silan-haltigen Comonomeren mit Vinylmonomeren und daran anschließender Verseifung der Vinylester-Einheiten.

Aus der EP-A 1127706 sind Papierbeschichtungen bekannt, welche sich durch hohe-Wasserfestigkeit, Licht- und Temperaturbeständigkeit auszeichnen und daher für den Einsatz im Außenbereich prädestiniert sind. Dieses Eigenschaftsprofil wird mit einer Kombination aus Pigment, Silanol-modifiziertem Polyvinylalkohol und einem filmbildenden Polymer mit einer Tg < 50°C erhalten.

Wärmeempfindliche Aufzeichnungspapiere mit einer Beschichtung, welche Siliciumverbindungen enthält, sind aus der DE-C 3519575 bekannt. Bei den Siliciumverbindungen kann es sich um Silicium-modifizierten Polyvinylalkohol in Kombination mit kolloidaler Kieselsäure und/oder amorpher Kieselsäure handeln.

Die EP-A 1080940 betrifft eine Beschichtungsmittel-Zusammensetzung zur Herstellung von wärmeempfindlichen Aufzeichnungsmaterialien oder Inkjet-Papieren, welche als eine Komponente Ethylen-Vinylalkohol-Copolymerisate oder Silicium-modifizierte Vinylalkoholpolymere oder Silicium-modifizierte Ethylen-Vinylalkoholpolymere, sowie als weitere Komponente eine Organotitan-Verbindung enthält.

Der Erfindung lag die Aufgabe zugrunde, ein Additiv auf Basis von Polyvinylalkohol für Streichmassen zu entwickeln, insbesondere zur Herstellung von Beschichtungen von Tintenstrahl-Aufzeichnungsmaterialien, welches zu hoher Abriebfestigkeit sowohl auf Papier- als auch auf Kunststoff-Trägermaterialien führt, ohne andere Eigenschaften der Beschichtung negativ zu beeinflußen.

Gegenstand der Erfindung sind Silan-haltige Polyvinylalkohole,
auf der Basis von vollverseiften oder teilverseiften Vinylester-Copolymerisaten mit einem Hydrolysegrad von 75 bis 100 Mol-% erhältlich durch radikalische Polymerisation von
a) einem oder mehreren Vinylestern von unverzweigten oder verzweigten Alkylcarbonsäuren mit 1 bis 18 C-Atomen,
b) 1 bis 30 Mol-%, bezogen auf Gesamtpolymer, eines oder mehrerer 1-Alkylvinylester mit Alkylresten mit 1 bis 6 C-Atomen und von Carbonsäuren mit 1 bis 6 C-Atomen,
c) 0.01 bis 10 Mol-% von einem oder mehreren Silan-haltigen, ethylenisch ungesättigten Monomeren, sowie gegebenenfalls
d) weitere damit copolymerisierbare Comonomere, und Verseifung der damit erhaltenen Polymerisate.

Geeignete Silan-haltige Polyvinylalkohole sind vollverseifte oder teilverseifte Vinylester-Polymerisate mit einem Hydrolysegrad von 75 bis 100 Mol-% und einem Anteil an Silan-haltigen Comonomereinheiten von 0.01 bis 10 Mol-%. Die vollverseiften Vinylester-Polymerisate haben einen Hydrolysegrad von vorzugsweise 97.5 bis 100 Mol-%, besonders bevorzugt 98 bis 99.5 Mol-%. Die teilverseiften Polyvinylester haben einen Hydrolysegrad von vorzugsweise 80 bis 95 Mol-%, besonders bevorzugt 86 bis 90 Mol-%. Die Höppler-Viskosität (nach DIN 53015 als 4 Gew.-%ige wässrige Lösung) dient als Maß für das Molekulargewicht und für den Polymerisationsgrad der teil- oder vollverseiften, silanisierten Vinylesterpolymerisate, und beträgt vorzugsweise von 2 bis 50 mPas.

Geeignete Vinylester a) sind Vinylester von unverzweigten oder verzweigten Carbonsäuren mit 1 bis 18 C-Atomen. Bevorzugte Vinylester sind Vinylacetat, Vinylpropionat, Vinylbutyrat, Vinyl-2-ethylhexanoat, Vinyllaurat, Vinylpivalat und Vinylester von α-verzweigten Monocarbonsäuren mit 5 bis 13 C-Atomen, beispielsweise VeoVa9^{R} oder VeoVa10R (Handelsnamen der Firma Shell). Besonders bevorzugt ist Vinylacetat.

Bevorzugte 1-Alkylvinylester mit Alkylresten mit 1 bis 6 C-Atomen und von Carbonsäuren mit 1 bis 6 C-Atomen b) sind 1- Methylvinylacetat, 1-Ethylvinylacetat, sowie 1-Propylvinylacetat.

Neben den Vinylester-Einheiten können gegebenenfalls noch ein oder mehreren Monomere d) aus der Gruppe umfassend Methacrylsäureester und Acrylsäureester von Alkoholen mit 1 bis 15 C-Atomen, Olefine, Diene, Vinylaromaten und Vinylhalogenide copolymerisiert sein. Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Besonders bevorzugt sind Methylacrylat, Methylmethacrylat, n-, iso- und t-Butylacrylat, 2-Ethylhexylacrylat und Norbornylacrylat. Geeignete Diene sind 1,3-Butadien und Isopren. Beispiele für polymerisierbare Olefine sind Ethen und Propen. Als Vinylaromaten können Styrol und Vinyltoluol einpolymerisiert werden. Aus der Gruppe der Vinylhalogenide werden üblicherweise Vinylchlorid, Vinylidenchlorid oder Vinylfluorid, vorzugsweise Vinylchlorid, eingesetzt. Der Anteil dieser Comonomere wird so bemessen, dass der Anteil an Vinylestermonomer > 50 Mol-% im Vinylester-Polymerisat beträgt.

Gegebenenfalls können noch weitere Comonomere d) in einem Anteil von vorzugsweise 0.1 bis 25 Mol-% enthalten sein. Beispiele hierfür sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise N-Vinylformamid, Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat, Butandioldiacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats.

Geeignete ethylenisch ungesättigte, silanhaltige Monomere c) sind beispielsweise ethylenisch ungesättigte Siliciumverbindungen der allgemeinen Formel R¹SiR²₀₋₂(OR³)₁₋₃, wobei R¹ die Bedeutung CH₂=CR⁴-(CH₂)₀₋₃ oder CH₂=CR⁴CO₂(CH₂)₁₋₃ hat, R² die Bedeutung C₁- bis C₃-Alkylrest, C₁- bis C₃-Alkoxyrest oder Halogen, vorzugsweise Cl oder Br hat, R³ ein unverzweigter oder verzweigter, gegebenenfalls substituierter Alkylrest mit 1 bis 12 C-Atomen, vorzugsweise 1 bis 3 C-Atomen, ist oder ein Acylrest mit 2 bis 12 C-Atomen ist, wobei R³ gegebenenfalls durch eine Ethergruppe unterbrochen sein kann, und R⁴ für H oder CH₃ steht.

Geeignete ethylenisch ungesättigte, silanhaltige Monomere c) sind auch Silan-Gruppen enthaltene Meth(acrylamide), der allgemeinen Formel
CH₂= CR⁵-CO-NR⁶-R⁷-SiR⁸ₘ-(R⁹)₃₋ₘ, wobei m= 0 bis 2, R⁵ entweder H oder eine Methyl-Gruppe ist, R⁶ H oder eine Alkyl-Gruppe mit 1 bis 5 C-Atomen ist; R⁷ eine Alkylen-Gruppe mit 1 bis 5 C-Atomen oder eine bivalente organische Gruppe in welcher die Kohlenstoffkette durch ein O- oder N-Atom unterbrochen wird, ist, R⁸ eine Alkyl-Gruppe mit 1 bis 5 C-Atomen ist, R⁹ eine Alkoxy-Gruppe mit 1 bis 40 C-Atomen ist, welche mit weiteren Heterocyclen substituiert sein können. In Monomeren, in denen 2 oder mehrere R⁵- oder R⁹- Gruppen vorkommen, können diese identisch oder unterschiedlich sein.

Beispiele für solche (Meth)acrylamido-alkylsilane sind:
3-(Meth)acrylamido-propyltrimethoxysilane, 3-(Meth)acrylamidopropyltriethoxysilane, 3-(Meth)acrylamido-propyltri(β-methoxyethoxy)silane, 2-(Meth)acrylamido-2-methylpropyltrimethoxysilane, 2-(Meth)acrylamido-2-methylethyltrimethoxysilane, N-(2-(Meth)acrylamido-ethyl)aminopropyltrimethoxysilane, 3-(Meth)acrylamido-propyltriacetoxysilane, 2-(Meth)acrylamidoethyltrimethoxysilane, 1-(Meth)acrylamido-methyltrimethoxysilane, 3-(Meth)acrylamido-propylmethyldimethoxysilane, 3-(Meth)acrylamido-propyldimethylmethoxysilane, 3-(N-Methyl-(Meth)acrylamido)-propyltrimethoxysilane, 3-((Meth)acrylamidomethoxy)-3-hydroxypropyltrimethoxysilane, 3-((Meth)acrylamidomethoxy)-propyltrimethoxysilane, N,N-Dimethyl-N-trimethoxysilylpropyl-3-(Meth)acrylamido-propylammoniumchlorid und N-N-Dimethyl-N-trimethoxysilylpropyl-2-(Meth)acrylamido-2-methylpropylammonium chlorid.

Bevorzugte ethylenisch ungesättigte, silanhaltige Monomere c) sind γ-Acryl- bzw. γ-Methacryloxypropyltri(alkoxy)silane, α-Methacryloxymethyltri (alkoxy) silane, γ-Methacryloxypropylmethyldi(alkoxy)silane; Vinylsilane wie Vinylalkyldi(alkoxy)-silane und Vinyltri(alkoxy)silane, wobei als Alkoxygruppen beispielsweise Methoxy-, Ethoxy-, Methoxyethylen, Ethoxyethylen-, Methoxypropylenglykolether- bzw. Ethoxypropylenglykolether-Reste eingesetzt werden können. Beispiele für bevorzugte silanhaltige Monomere sind 3-Methacryloxypropyltrimethoxysilan, 3-Methacryloxypropylmethyldimethoxysilan, Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, Vinyltriacetoxysilan, Methacryloxymethyltrimethoxysilan, 3-Methacryloxypropyl-tris(2-methoxyethoxy)silan, Vinyltrichorsilan, Vinylmethyldichlorsilan, Vinyltris-(2-methoxyethoxy)silan, Trisacetoxyvinylsilan, Allylvinyltrimethoxysilan, Allyltriacetoxysilan, Vinyldimethylmethoxysilan, Vinyldimethylethoxysilan, Vinylmethyldiacetoxysilan, Vinyldimethylacetoxysilan, Vinylisobutyldimethoxysilan, Vinyltriisopropyloxysilan, Vinyltributoxysilan, Vinyltrihexyloxysilan, Vinylmethoxydihexoxysilan, Vinyltrioctyloxysilan, Vinyldimethoxyoctyloxysilan, Vinylmethoxydioctyloxysilan, Vinylmethoxydilauryloxysilan, Vinyldimethoxylauryloxysilan sowie auch Polyethylenglykol-modifizierte Vinylsilane.

Als Silane c) werden am meisten bevorzugt Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyl-tris(2-methoxyethoxy)silan, 3-Methacryloxypropyltrimethoxysilan, 3-Methacryloxypropylmethyldimethoxysilan und Methacryloxymethyltrimethoxysilan sowie deren Gemische.

Die ethylenisch ungesättigten, silanhaltigen Monomere c) werden in einer Menge von 0.01 bis 10.0 Mol-%, bevorzugt 0.01 bis 1.0 Mol-%, copolymerisiert.

Die Vinylester-Polymerisate können in bekannter Weise mittels Polymerisation hergestellt werden; vorzugsweise durch Substanzpolymerisation, Suspensionspolymerisation oder durch Polymerisation in organischen Lösungsmitteln, besonders bevorzugt in alkoholischer Lösung. Geeignete Lösungsmittel sind beispielsweise Methanol, Ethanol, Propanol, Isopropanol. Die Polymerisation wird unter Rückfluß bei einer Temperatur von 55°C bis 100°C durchgeführt und durch Zugabe gängiger Initiatoren radikalisch initiiert. Beispiele für gängige Initiatoren sind Percarbonate wie Cyclohexylperoxidicarbonat oder Perester wie t-Butylperneodecanoat oder t-Butylperpivalat.

Die Monomere können insgesamt vorgelegt werden, insgesamt zudosiert werden oder in Anteilen vorgelegt werden und der Rest nach der Initiierung der Polymerisation zudosiert werden. Die Dosierungen können separat (räumlich und zeitlich) durchgeführt werden oder die zu dosierenden Komponenten können alle oder teilweise voremulgiert dosiert werden.

Die Einstellung des Molekulargewichts kann in dem Fachmann bekannter Weise durch Polymerisation in Gegenwart von Molekulargewichtsreglern erfolgen. Geeignete Regler sind beispielsweise Alkohole wie Ethanol oder Isopropanol, Aldehyde wie Acetaldehyd oder Propionaldehyd, silanhaltige Regler wie Mercaptosilane, beispielsweise 3-Mercaptopropyltrimethoxysilan.

Die Verseifung der Vinylester-Polymerisate erfolgt in an sich bekannter Weise, zum Beispiel nach dem Band- oder Kneterverfahren oder im Rührkessel, im Alkalischen oder Sauren unter Zugabe von Säure oder Base. Vorzugsweise wird das Vinylester-Festharz in Alkohol, beispielweise Methanol, unter Einstellen eines Feststoffgehalts von 15 bis 70 Gew.-% aufgenommen. Bevorzugt wird die Hydrolyse im Basischen durchgeführt, beispielsweise durch Zugabe von NaOH, KOH oder NaOCH₃. Die Base wird im allgemeinen in einer Menge von 1 bis 5 Mol-% pro Mol Ester-Einheiten eingesetzt. Die Hydrolyse wird bei Temperaturen von 30°C bis 70°C durchgeführt.

Nach Abschluß der Hydrolyse wird das Lösungsmittel abdestilliert und der Polyvinylalkohol wird als Pulver erhalten. Der Polyvinylalkohol kann aber auch durch eine sukzessive Zugabe von Wasser, während das Lösungsmittel abdestilliert wird, als wässrige Lösung gewonnen werden. Die wässrige Lösung der Silan-haltigen Polyvinylalkohole kann gegebenenfalls mittels Sprühtrocknung verdüst werden, und der Silan-haltige Polyvinylalkohol als Pulver gewonnen werden.

Die Silan-haltigen Polyvinylalkohole eignen sich, gegebenenfalls in Verbindung mit weiteren Bindemitteln und Additiven, als Additive in Rezepturen von Streichmassen zur Beschichtung von Trägermaterialien, vorzugsweise aus Papier oder Kunststofffolie, insbesondere für Tintenstrahl-Aufzeichnungsmaterialien, beispielsweise Inkjet-Papier und Inkjet-Folien. Beispiele für geeignete Trägermaterialien sind Papier, mit Kunststoff beschichtetes Papier wie mit Polyethylen, Polypropylen oder PET beschichtetes Papier, sowie Celluloseacetat-Folien, Polyester-Folien wie PET-Folie, Polyamid-, Polycarbonat-, Polyolefin-, Polyimid-, Polyamid-, Polyvinylacetal-, Polyether- und Polysulfonamid-Folien.

Die Rezepturen für Streichmassen sind dem Fachmann bekannt. Im allgemeinen werden 10 bis 50 Gew.-% der Silan-haltigen Polyvinylalkohole (fest), bezogen auf den Gesamtfeststoffgehalt der Rezeptur eingesetzt. Die Silan-haltigen Polyvinylalkohole können als alleinige Bindemittel eingesetzt werden, oder als Cobinder mit weiteren Bindemitteln.

Typische weitere Additive und Bindemittel sind:
Kationische Dispergiermittel wie Polydiallyldimethylammoniumchlorid, Benzyldimethylstearylammoniumchlorid, Dimethylstearylammoniumchlorid, Copolymere mit Acrylamid, Dimethylaminepichlorhydrin, Polyoxyalkyl-polyamin-dicyanodiamin, Dimethylaminoethyl-methacrylat (MADAME) modifizierte Polymere, Methacryloxyethyltrimethylammoniumchlorid (MADQUAT) modifizierte Polymere, kationische Cellulosederivate, kationische Stärkederivate, kationische Polyvinylalkohole, Polyethylenimin und dessen Copolymere, Verbindungen mit trivalenten Aluminium-, Borund Zinkionen, Triethanolamin-Titanium-Chelatkomplex, Copolymere vom Vinylpyrolidone, Polyamidoamine.

Bindemittel wie Hydroxyethylcellulose, Stärke, Gelatin, Casein, Polyvinylpyrrolidone, Dextran, Dextrin, Polyethylenglycole, Agar, Carrageenan, Xanthan, Polymerdispersionen wie Styrol-Butadien-Latices, Polyacrylat-Emulsionen, Polyvinylester-Dispersionen.
Weichmacher wie Ethylenglycol, Diethylenglycol, Propylenglycol, Polyethylenglycol, Glycerin, Glycerinmonomethylether, Glycerinmonochlorhydrin, Ethylencarbonat, Propylencarbonat, Tetrachlrophthalsäureanhydrid, Tetrabromphthalsäureanhydrid, Harnstoff, Harnstoffphosphat, Triphenylphosphat, Glycerinmonostearat, Propylenglycolmonostearat, Tetramethylensulfon, N-Methyl-2-pyrrolidon, N-Vinyl-2-pyrrolidon, Sorbit.
Pigmente und Füllstoffe wie Kieselsäure, Calciumcarbonat, Clay, Bentonit, Aluminiumoxid und Titanoxid.
Entschäumer und Dispergierhilfsmittel wie Polydiallyldimethylammoniumchlorid, Benzyldimethylstearylammoniumchlorid, Dimethylstearylammoniumchlorid, sowie Egalisiermittel, Nuancierungsfarbstoff, Netzmittel, Viskositätsstabilisator, pH-Regulierer, Härter, UV-Absorber, Oxidationsinhibitor, optische Aufheller, farbstofffixierende Mittel.

Mit den Silan-haltigen Polyvinylalkoholen werden Beschichtungen erhalten, welche sich durch hervorragende Abriebfestigkeiten auszeichnen. Weiter werden mit den Silan-haltigen Polyvinylalkoholen Bindemittel erhalten, welche sich durch exzellente Lagerstabilität deren Lösungen auszeichnen.

### Beispiele:

### Beispiel 1:

In einer thermostatisierten Laborapperatur mit 2.5 Liter Füllvolumen wurden unter Stickstoff 612 g Wasser, 61.2 mg Kupfer(II)-Acetat und 61.2 g einer 5 %-igen Polyvinylpyrrolidon-Lösung (PVP-K90) in Wasser vorgelegt. Unter Rühren wurden eine Lösung von 620 mg t-Butyl-per-2-ethyl-hexanoat (TBPEH 99 %-ig in Wasser), 322 mg t-Butyl-per-neodecanoat (Pergan PND 95 %-ig in Wasser) 4.9 g Vinyltriethoxysilan, 48.9 g Isopropenylacetat und 42.8 g Isopropanol in 612 g Vinylacetat zulaufen gelassen. Der Reaktor wurde auf 51.5°C aufgeheizt, nach Abflauen der Reaktion wurde stufenweise auf 75°C aufgeheizt. Es wurde noch 2 Stunden bei dieser Temperatur gehalten, dann abgekühlt. Die entstandenen Polymer-Perlen wurden abgesaugt, gut mit Wasser gewaschen und getrocknet.
In einem Laborreaktor mit 2.5 Liter Inhalt wurden 90 g Polymer-Perlen in 810 g Methanol bei 50°C gelöst. Die Lösung wurde auf 30°C abgekühlt, bei stehendem Rührer mit 500 g Methanol überschichtet und sofort mit methanolischer NaOH versetzt (10 g NaOH 46 %-ig in Wasser gelöst in 90 g Methanol) und der Rührer eingeschaltet.
Die Lösung wurde zunehmend trüber. Während der Gelphase wurde der Rührer auf höhere Drehzahl gestellt, um das Gel zu zerkleinern. Nach der Gelphase wurde noch 2 Stunden weiter reagieren gelassen, mit Essigsäure neutralisiert und der gebildete Feststoff abfiltriert, gewaschen und getrocknet. Es wurde ein vollverseifter Polyvinylalkohol erhalten, mit einer Höppler-Viskosität von 28 mPas (4 %-ig in Wasser)

### Vergleichsbeispiel 1:

### Handelsüblicher silanhaltiger Polyvinylalkohol mit einer Höppler-Viskosität von 25 mPas (4 %-ig in Wasser)

### Anwendungstechnische Prüfung:

Die Polyvinylalkohole aus dem Beispiel bzw. Vergleichsbeispiel wurden in folgenden Rezepturen getestet:

### Rezeptur Streichmasse zur Papierbeschichtung:

| | |
|---|---|
| Gefällte Kieselsäure | 100 Gew.-Teile |
| Polyvinylalkohol | 35 Gew.-Teile |
| Kationisches Dispergiermittel | 5 Gew.-Teile |
| Festgehalt der Streichmasse: | 20 - 35 Gew.-% |

Getestet wurde die Streichmasse auf Rohpapier: Geleimtes Papier 80 g/m². Der Strichauftrag betrug 15 g/m²

### Rezeptur Streichmasse zur Kunststofffolienbeschichtung:

| | |
|---|---|
| Gefällte Kieselsäure | 100 Gew.-Teile |
| Polyvinylalkohol | 34 Gew.-Teile |
| Kationisches Dispergiermittel | 8 Gew.-Teile |
| Polymerdispersion | 50 Gew.-Teile |
| Festgehalt der Streichmasse: | 20 - 28 Gew.-% |

Getestet wurde die Streichmasse auf einer mit Haftvermittler ausgestatteten PET-Folie 90 g/m². Der Strichauftrag betrug 15 g/m²

### Scheuertest:

Ein 4.5 cm breiter und 19 cm langer bestrichener Papierstreifen oder Folienstreifen wurde in einem Scheuerprüfer der Fa. Prüfbau (System Dr. Dürner) mit einem auf einen Stempel (500 g) aufgebrachten schwarzen Tonzeichenpapier mit 50 Hüben bearbeitet.
Das resultierende schwarze Papier wurde danach optisch beurteilt, wobei die Note 1 das Optimum darstellt.

### Weißgrad:

Der Weißgrad wurde mittels Remissionsmessung mit einem Filter R 457 bestimmt und optisch beurteilt, wobei die Note 1 das Optimum darstellt.

### Lagerstabilität:

Die Lagerstabilität wurde getestet, indem jeweils 11 %-ige wässrige Lösungen der Polyvinylalkohole bei einem pH-Wert von 8.5 bis zu 14 Tagen gelagert worden sind, und die Höppler-Viskosität (nach DIN 53015 als 4 Gew.-%-ige wässrige Lösung) bestimmt worden ist.

**Tabelle 1 (Ergebnisse auf Papier):**

| Strichanalyse | Beispiel 1 | Vergleichsbeispiel 1 |
|---|---|---|
| Scheuertest | 1.0 | 1.5 |
| Weißgrad optisch | 1.0 | 1.0 |
| Weißgrad R457 | 5.1 | 5.2 |

**Tabelle 2 (Ergebnisse auf Kunststofffolie):**

| Strichanalyse | Beispiel 1 | Vergleichsbeispiel 1 |
|---|---|---|
| Scheuertest | 1.0 | 1.5 |
| Weißgrad optisch | 1.0 | 1.0 |
| Weißgrad R457 | 5.3 | 5.3 |

**Tabelle 3 (Lagerstabilität):**

| Lagerzeit | Höppler-Viskosität [mPas], Bsp. 1 | Höppler-Viskosität [mPas], Vbsp. 1 |
|---|---|---|
| sofort | 28.1 | 25.1 |
| 1 Tag | 28.1 | 27.8 |
| 2 Tage | 28.1 | 31.4 |
| 3 Tage | 28.2 | 35.8 |
| 5 Tage | 28.2 | 42.9 |
| 7 Tage | 28.2 | 61.7 |
| 14 Tage | 28.3 | 90.5 |

## Patentansprüche

1. Silan-haltige Polyvinylalkohole auf der Basis von vollverseiften oder teilverseiften Vinylester-Copolymerisaten mit einem Hydrolysegrad von 75 bis 100 Mol-% erhältlich durch radikalische Polymerisation von
a) einem oder mehreren Vinylestern von unverzweigten oder verzweigten Alkylcarbonsäuren mit 1 bis 18 C-Atomen,
b) 1 bis 30 Mol-%, bezogen auf Gesamtpolymer, eines oder mehrerer 1-Alkylvinylester mit Alkylresten mit 1 bis 6 C-Atomen und von Carbonsäuren mit 1 bis 6 C-Atomen,
c) 0.01 bis 10 Mol-% von einem oder mehreren Silan-haltigen, ethylenisch ungesättigten Monomeren, sowie gegebenenfalls
d) weitere damit copolymerisierbare Comonomere,
und Verseifung der damit erhaltenen Polymerisate.

2. Silan-haltige Polyvinylalkohole nach Anspruch 1, wobei als Vinylester a) Vinylacetat eingesetzt wird.

3. Silan-haltige Polyvinylalkohole nach Anspruch 1 oder 2, wobei als 1-Alkylvinylester b) 1-Methyl-Vinylacetat eingesetzt wird.

4. Silan-haltige Polyvinylalkohole nach Anspruch 1 bis 3 mit einer Höppler-Viskosität (nach DIN 53015 als 4 Gew.-%-ige wässrige Lösung) von 2 bis 50 mPas.

5. Silan-haltige Polyvinylalkohole nach Anspruch 1 bis 4, wobei als Silan-haltige, ethylenisch ungesättigte Monomere c) Verbindungen aus der Gruppe umfassend
ethylenisch ungesättigte Siliciumverbindungen der allgemeinen Formel R¹SiR²₀₋₂(OR)₁₋₃, wobei R¹ die Bedeutung CH₂=CR⁴-(CH₂)₀₋₃ oder CH₂=CR⁴CO₂(CH₂)₁₋₃ hat, R² die Bedeutung C₁- bis C₃-Alkylrest, C₁- bis C₃-Alkoxyrest oder Halogen hat, R³ ein unverzweigter oder verzweigter, gegebenenfalls substituierter Alkylrest mit 1 bis 12 C-Atomen ist oder ein Acylrest mit 2 bis 12 C-Atomen ist, wobei R³ gegebenenfalls durch eine Ethergruppe unterbrochen sein kann, und R⁴ für H oder CH₃ steht, oder
Silan-Gruppen enthaltene(Meth) acrylamide, der allgemeinen Formel
CH₂= CR⁵-CO-NR⁶-R⁷-SiR⁸ₘ-(R⁹)₃₋ₘ, wobei m= 0 bis 2, R⁵ entweder H oder eine Methyl-Gruppe ist, R⁶ H oder eine Alkyl-Gruppe mit 1 bis 5 C-Atomen ist, R⁷ eine Alkylen-Gruppe mit 1 bis 5 C-Atomen oder eine bivalente organische Gruppe in welcher die Kohlenstoffkette durch ein O- oder N-Atom unterbrochen wird, ist, R⁸ eine Alkyl-Gruppe mit 1 bis 5 C-Atomen ist, R⁹ eine Alkoxy-Gruppe mit 1 bis 40 C-Atomen
ist, welche mit weiteren Heterocyclen substituiert sein können,
eingesetzt werden.

6. Verfahren zur Herstellung der Silan-haltigen Polyvinylalkohole nach Anspruch 1 bis 5 mittels Substanzpolymerisation, Suspensionspolymerisation oder durch Polymerisation in organischen Lösungsmitteln von Monomermischungen aus den Monomeren a), b), c) und gegebenenfalls d), und Verseifung der damit erhaltenen Polymerisate.

7. Verwendung der Silan-haltigen Polyvinylalkohole nach Anspruch 1 bis 5 als Additive in Streichmassen.

8. Verwendung nach Anspruch 7 als Additive in Streichmassen zur Beschichtung von Trägermaterialien aus Papier, mit Kunststoff beschichtetem Papier oder Kunststofffolie.

9. Verwendung nach Anspruch 7 oder 8 als Additive in Streichmassen zur Beschichtung von Tintenstrahl-Aufzeichnungsmaterialien.

## Claims

1. Silane-containing polyvinyl alcohols, based on completely hydrolyzed or partially hydrolyzed vinyl ester copolymers having a degree of hydrolysis of from 75 to 100 mol%, obtainable by free radical polymerization of
a) one or more vinyl esters of straight-chain or branched alkanecarboxylic acids having 1 to 18 carbon atoms,
b) from 1 to 30 mol%, based on total polymer, of one or more 1-alkylvinyl esters having alkyl radicals having 1 to 6 carbon atoms and of carboxylic acids having 1 to 6 carbon atoms,
c) from 0.01 to 10 mol% of one or more silane-containing, ethylenically unsaturated monomers and, if required,
d) further comonomers copolymerizable therewith,
and hydrolysis of the polymers obtained thereby.

2. Silane-containing polyvinyl alcohol according to Claim 1, the vinyl ester a) used being vinyl acetate.

3. Silane-containing polyvinyl alcohols according to Claim 1 or 2, the 1-alkylvinyl ester b) used being 1-methylvinyl acetate.

4. Silane-containing polyvinyl alcohols according to Claims 1 to 3, having a Höppler viscosity (according to DIN 53015, as 4% strength by weight aqueous solution) of from 2 to 50 mPas.

5. Silane-containing polyvinyl alcohols according to Claims 1 to 4, the silane-containing, ethylenically unsaturated monomers c) used being compounds from the group consisting of ethylenically unsaturated silicon compounds of the general formula R¹SiR²₀₋₂(OR³)₁₋₃, in which R¹ has the meaning CH₂=CR⁴- (CH₂)₀₋₃ or CH₂=CR⁴CO₂(CH₂)₁₋₃, R² has the meaning C₁- to C₃-alkyl radical, C₁- to C₃-alkoxy radical or halogen, R³ is a straight-chain or branched, unsubstituted or substituted alkyl radical having 1 to 12 C atoms or an acyl radical having 2 to 12 C atoms, it being possible for R³ to be interrupted by an ether group, and R⁴ is H or CH₃, or
(meth)acrylamides containing silane groups and of the general formula CH₂=CR⁵-CO-NR⁶-R⁷-SiR⁸ₘ-(R⁹)₃₋ₘ, in which m = 0 to 2, R⁵ is either H or a methyl group, R⁶ is H or an alkyl group having 1 to 5 C atoms, R⁷ is an alkylene group having 1 to 5 C atoms or a bivalent organic group in which the carbon chain is interrupted by an O or N atom, R⁸ is an alkyl group having 1 to 5 C atoms and R⁹ is an alkoxy group which has 1 to 40 C atoms and may be substituted by further heterocycles.

6. Process for the preparation of the silane-containing polyvinyl alcohols according to any of Claims 1 to 5 by means of mass polymerization, suspension polymerization or polymerization in organic solvents of monomer mixtures of the monomers a), b), c) and, if appropriate, d), and hydrolysis of the polymers thus obtained.

7. Use of the silane-containing polyvinyl alcohols according to Claims 1 to 5 as additives in coating slips.

8. Use according to Claim 7 as additives in coating slips for the coating of substrate materials comprising paper, plastic-coated paper or plastics foil.

9. Use according to Claim 7 or 8 as additives in coating slips for the coating of inkjet recording materials.

## Revendications

1. Poly(alcool vinylique)s silanés à base de copolymères d'esters vinyliques partiellement saponifiés ou totalement saponifiés ayant un degré d'hydrolyse de 75 à 100 % en moles, pouvant être obtenus par polymérisation radicalaire de
a) un ou plusieurs esters vinyliques d'acides alkylcarboxyliques ramifiés ou non ramifiés ayant de 1 à 18 atomes de carbone,
b) 1 à 30 % en moles, par rapport au polymère total, d'un ou plusieurs esters 1-alkylvinyliques à radicaux alkyle ayant de 1 à 6 atomes de carbone et d'acides carboxyliques ayant de 1 à 6 atomes de carbone,
c) 0,01 à 10 % en moles d'un ou plusieurs monomères silanés à insaturation éthylénique, ainsi qu'éventuellement
d) d'autres comonomères copolymérisables avec ceux-ci,
et saponification des produits de polymérisation ainsi obtenus.

2. Poly(alcool vinylique)s silanés selon la revendication 1, dans lesquels on utilise comme ester vinylique a) l'acétate de vinyle.

3. Poly(alcool vinylique)s silanés selon la revendication 1 ou 2, dans lesquels on utilise comme ester 1-alkylvinylique b) l'acétate de 1-méthylvinyle.

4. Poly(alcool vinylique)s silanés selon l'une quelconque des revendications 1 à 3, ayant une viscosité Höppler (selon DIN 53015, sous forme de solution aqueuse à 4 % en poids) de 2 à 50 mPa.s.

5. Poly(alcool vinylique)s silanés selon l'une quelconque des revendications 1 à 4, dans lesquels on utilise comme monomères silanés à insaturation éthylénique c) des composés choisis dans le groupe comprenant
des composés siliciés à insaturation éthylénique de formule générale R¹SiR²₀₋₂(OR³)₁₋₃, R¹ ayant la signification de CH₂=CR⁴- (CH₂)₀₋₃ ou de CH₂=CR⁴CO₂(CH₂)₁₋₃, R² représentant un radical alkyle en C₁-C₃, un radical alcoxy en C₁-C₃ ou un atome d'halogène, R³ étant un radical alkyle ramifié ou non ramifié, éventuellement substitué, ayant de 1 à 12 atomes de carbone, ou étant un radical acyle ayant de 2 à 12 atomes de carbone, R³ pouvant éventuellement être interrompu par un groupe éther, et R⁴ représentant H ou CH₃, ou
des (méth)acrylamides contenant des groupes silane, de formule générale
CH₂=CR⁵-CO-NR⁶-R⁷-SiR⁸ₘ-(R⁹)₃₋ₘ, dans laquelle m = 0 à 2, R⁵ est soit H, soit un groupe méthyle, R⁶ est H ou un groupe alkyle ayant de 1 à 5 atomes de carbone, R⁷ est un groupe alkylène ayant de 1 à 5 atomes de carbone ou un groupe organique bivalent dans lequel la chaîne carbonée est interrompue par un atome d'oxygène ou d'azote, R⁸ est un groupe alkyle ayant de 1 à 5 atomes de carbone, R⁹ est un groupe alcoxy ayant de 1 à 40 atomes de carbone, qui peuvent être substitués par d'autres hétérocycles.

6. Procédé pour la préparation des poly(alcool vinylique)s silanés selon l'une quelconque des revendications 1 à 5, par polymérisation en masse, polymérisation en suspension ou par polymérisation dans des solvants organiques de mélanges de monomères à base des monomères a), b), c) et éventuellement d), et saponification des produits de polymérisation ainsi obtenus.

7. Utilisation des poly(alcool vinylique)s silanés selon l'une quelconque des revendications 1 à 5, en tant qu'additifs dans des matières de couchage.

8. Utilisation selon la revendication 7, en tant qu'additifs dans des matières de couchage pour le revêtement de matériaux de support à base de papier, de papier revêtu de matière plastique ou de film de matière plastique.

9. Utilisation selon la revendication 7 ou 8, en tant qu'additifs dans des matières de couchage pour le revêtement de matériaux d'enregistrement par jet d'encre.
